# EUROPÄISCHE PATENTSCHRIFT

(11) **EP 3 020 994 B1**
(45) Veröffentlichungstag und Bekanntmachung des Hinweises auf die Patenterteilung: **13.06.2018**
(21) Anmeldenummer: 15002859.5
(22) Anmeldetag: 30.09.2015
(51) Int. Cl.: F16D 3/72

(54) **VORRICHTUNG ZUR ÜBERTRAGUNG VON DREHMOMENTEN U.A**
DEVICE FOR TRANSMITTING TORQUE ETC.
DISPOSITIF DE TRANSMISSION DE COUPLE ENTRE AUTRES

(30) Priorität: 14.11.2014 DE 102014016798
(43) Veröffentlichungstag der Anmeldung: 18.05.2016
(73) Patentinhaber: Centa-Antriebe Kirschey GmbH, 42781 Haan (DE)
(72) Erfinder: Hartmann, Norbert, 51069 Köln (DE)
(74) Vertreter: Roche, von Westernhagen & Ehresmann

(56) Entgegenhaltungen:
- EP-A2- 2 166 243
- CN-A- 103 477 104
- GB-A- 486 917

## Beschreibung

Die Erfindung betrifft zunächst eine Vorrichtung zur Übertragung von Drehmomenten nach dem Oberbegriff des Anspruches 1.

Vorrichtungen zur Übertragung von Drehmomenten von einem Antrieb und einem Abtrieb werden gemeinhin auch als Kupplungen bezeichnet. Kupplungen werden von der Anmelderin seit Jahrzehnten entwickelt und vertrieben.

Man unterscheidet zwischen drehweichen Kupplungen und drehsteifen (oder torsionssteifen) Kupplungen.

Als drehweiche (oder elastische) Kupplung wird eine Kupplung bezeichnet, die in Folge einer gewissen Torsion einen Verdrehwinkel zwischen dem ersten Anschluss und dem zweiten Anschluss in einem Bereich von typischerweise etwa zwischen 6° und 12° in dem zu erwartenden Arbeitsbereich, also im Rahmen der bei einem normalen Betrieb der Kupplung zu erwartenden Drehmomente, zulässt. Eine drehweiche Kupplung (auch: sog. elastische Kupplung) weist eine Resonanzfrequenz auf, die so gewählt wird, dass sie unterhalb des Arbeitsbereiches (der zu erwartenden Frequenzen) liegt. Drehweiche Kupplungen dämpfen insbesondere Drehmomentspitzen bei einer bestimmten Frequenz oder in einem bestimmten Frequenzbereich, und schützen beispielsweise die einem Antrieb (z. B. einem Dieselmotor) nachgeschalteten Bauelemente (z. B. ein Getriebe) vor Drehungleichmäßigkeiten.

Drehsteife Kupplungen sind demgegenüber Kupplungen einer gänzlich anderen Art. Bei einer drehsteifen Kupplung soll ein Verdrehwinkel zwischen dem ersten Anschluss und dem zweiten Anschluss im Arbeitsbereich der Kupplung sehr klein gehalten werden. Eine drehsteife Kupplung ist also eine nahezu drehstarre Kupplung. Hier wird die Resonanzfrequenz oberhalb, typischerweise weit oberhalb, des Arbeitsbereiches der Kupplung gewählt. Drehsteife Kupplungen kommen insbesondere in Anwendungsfällen zum Einsatz, wo ein Verdrehwinkel zwischen dem ersten Anschluss und dem zweiten Anschluss im typischen Arbeitsbereich nicht zugelassen werden soll, oder nicht erforderlich ist.

Die Erfindung bezieht sich auf solche drehsteifen Kupplungen der zuletzt geschilderten Art.

Im Rahmen der vorliegenden Patentanmeldung werden als drehsteife Kupplungen solche Kupplungen angesehen, die noch einen geringen Verdrehwinkel zwischen dem ersten Anschluss und dem zweiten Anschluss von beispielsweise bis zu 0,5°, ggf. auch noch bis zu 1,5°, im typischen Arbeitsbereich der Kupplung zulassen, größere Verdrehwinkel aber verhindern..

Drehsteife Kupplungen der gattungsgemäßen Art werden von der Anmelderin beispielsweise unter der Artikelbezeichnung CENTAFLEX-KE vertrieben. Hier ist ein Flanschelement aus einem hochfesten, glasfaserverstärktem Kunststoff vorgesehen, welches radial innenseitig eine axial steckbare Nabe aufweist. Der ringscheibenförmige Flansch besteht aus Kunststoff und ist mit Versteifungsstreben versehen.

Radial außen sind an dem Ringflansch Gummibuchsen vorgesehen, die eine Schraubbefestigung der Kupplung beispielsweise an dem Schwungrad eines Motors erlauben.

Auf Grund der Gummibuchsen ist ein Radialversatz in sehr geringem Maße bis zu 0,3 mm, ausgleichbar.

Eine weitere drehsteife Kupplung der gattungsgemäßen Art wird von der Anmelderin unter der Bezeichnung CENTAFLEX-K vertrieben. Hier ist ein membranartiger, dünner Ringflansch vorgesehen, der ebenfalls aus einem glasfaserverstärktem Kunststoff besteht. Im Bereich der Nabe ist eine axiale Steckverbindung mit einer Welle möglich. Die Metallnabe kann mit ihren radial nach außen vorstehenden Zähnen in entsprechende Ausnehmungen der Kupplungsnabe eingesteckt werden.

Ausgehend von den beschriebenen gattungsgemäßen drehsteifen Kupplungen gemäß dem Oberbegriff des Anspruches 1 liegt der Erfindung die Aufgabe zugrunde, eine Kupplung zu schaffen, die drehsteif ausgebildet ist, aber einen Radialversatz in einem größeren Maße, als im Stand der Technik bekannt, ausgleichen kann.

Die Erfindung löst diese Aufgabe zunächst mit den Merkmalen des Anspruches 1, insbesondere mit denen des Kennzeichenteils, und ist demgemäß dadurch gekennzeichnet, dass in dem Kraftleitungsweg zwischen den beiden Anschlüssen ein elastisches Element angeordnet ist, welches radialweich, einen Radialversatz zwischen dem ersten Anschluss und dem zweiten Anschluss zulassend, und drehsteif, einen nur sehr kleinen Verdrehwinkel zwischen dem ersten Anschluss und dem zweiten Anschluss zulassend, ausgebildet ist.

Gemäß der Erfindung wird eine Vorrichtung zur Übertragung von Drehmomenten von einem Antrieb zu einem Abtrieb vorgeschlagen. Der Antrieb kann beispielsweise das Schwungrad eines Motors, beispielsweise eines hydrostatischen Antriebs einer Baumaschine sein. Der Abtrieb kann von einer Welle bereitgestellt sein, die zu einem Getriebe, insbesondere zu einem Verteilergetriebe führt.

Die Vorrichtung umfasst einen ersten Anschluss zur Verbindung mit dem Antrieb und einen zweiten Anschluss zur Verbindung mit dem Abtrieb. Der erste Anschluss kann insbesondere von einem ringförmigen Flansch bereitgestellt sein. Dieser kann vorzugsweise aus Metall oder aus einem harten Kunststoff bestehen. Er kann radial außen, umfangsverteilt angeordnet, mehrere Befestigungsbohrungen aufweisen, mit deren Hilfe der Flansch - unter Vermeidung von Spiel- oder von Losflächen -, und ohne Zwischenschaltung elastischer Elemente, unmittelbar an dem Schwungrad des Motors befestigt werden kann.

Ein zweiter Anschluss kann von einer Nabe gebildete sein, die aus Kunststoff besteht. Die Nabe kann ein inneres Nabenteil aufweisen, das aus einem hochfesten Kunststoff oder aus Metall besteht. Dieses innere Nabenteil kann unter Bildung der Nabe umspritzt sein.

Das Nabenteil kann eine Innenverzahnung aufweisen oder im Nachhinein mit Hilfe eines Räumwerkzeuges eingebracht werden.

Die Innenverzahnung dient einer axialen Steckverbindung der Nabe mit einer Welle.

Die Vorrichtung wird z. B. zunächst an dem Schwungrad des Motors über den ersten Anschluss festgelegt, und sodann durch die axiale Steckverbindung eine Verbindung mit der Welle vorgenommen. Die Montagereihenfolge kann allerdings auch umgekehrt getroffen sein.

Vorrichtungen der gattungsgemäßen Art werden gemeinhin als Kupplungen bezeichnet, so dass der Begriff "Kupplung" zu dem Begriff "Vorrichtung" gemäß dem Oberbegriff des Anspruches 1 im Folgenden synonym verwendet wird.

Gemäß der Erfindung ist in dem Kraftleitungsweg zwischen den beiden Anschlüssen ein elastisches Element angeordnet. Das Prinzip der Erfindung sieht somit vor, dass die Kupplung einen ersten Anschluss und einen zweiten Anschluss aufweist, die von gesonderten, baulich zunächst getrennten Elementen gebildet sind. Die Elemente werden durch ein elastisches Element, vorzugsweise aus einer gummielastischen Masse, miteinander verbunden. Dabei kommen vorzugsweise gummielastische Massen in Frage, die im ausgehärteten Zustand eine Shorehärte im Bereich von 80 +/- 10 aufweisen.

Das elastische Element ist sowohl an den ersten Anschluss, als auch an den zweiten Anschluss anvulkanisiert. Konkret ist bei einer Ausführungsform vorgesehen, dass der Ringflansch Flächen zur Anvulkanisation des elastischen Elementes aufweist, und die Nabe radial gegenüberliegend angeordnete Gegenflächen, die ebenfalls zur Anvulkanisation des elastischen Elementes dienen. Diese Flächen werden im Folgenden auch als An-Vulkanisationsflächen bezeichnet.

Gemäß einer besonderen Ausgestaltung der Erfindung sind die Anvulkanisationsflächen parallel zueinander oder im Wesentlichen parallel zueinander angeordnet, und verlaufen entlang einer Radialebene, also entlang einer Ebene, deren Normalenvektor von der Rotationsachse der Vorrichtung bereitgestellt ist.

Die Besonderheit der Erfindung besteht darin, dass das elastische Element radial weich, aber drehsteif ausgebildet ist. Dies bedeutet, dass auf Grund der gewählten Geometrie, also der Raumform des elastischen Elementes, und auf Grund dessen axialer Erstreckung, sowie dessen radialer Erstreckung, das Element einen gewissen Radialversatz zwischen dem ersten Anschluss und dem zweiten Anschluss zulässt, einen Verdrehwinkel zwischen dem ersten Anschluss und dem zweiten Anschluss aber in einem nur sehr kleinen Winkelbereich von maximal 0,5 Grad zulässt, größere Verdrehwinkel aber verhindert. Angemerkt sei in diesem Zusammenhang noch, dass von der Erfindung auch Vorrichtungen umfasst sind, die noch einen maximalen Verdrehwinkel zwischen dem ersten Anschluss und dem zweiten Anschluss von höchstens 1,5 Grad zulassen können.

Diese Angaben gelten für die zu erwartenden Arbeitsbereiche der Kupplungen, also für die typischerweise zu erwartenden Drehmomente und Drehmomentdifferenzen bzw. Drehmomentungleichmäßigkeiten.

Gemäß der Erfindung kann beispielsweise ein Radialversatz von bis zu 1 mm ausgeglichen werden. Die auf Grund von Montage- oder Fertigungstoleranzen an dem Antrieb, bzw. an dem Abtrieb zu erwartenden Toleranzen in radialer Abweichung können vorzugsweise in einem Bereich zwischen 0,5 mm bis zu 1 mm aufgefangen und ausgeglichen werden. Dabei ist der Radialausgleich gemäß der Erfindung verschleißfrei möglich, da der Radialausgleich vollständig innerhalb des elastischen Elementes aufgefangen wird.

Die Erfindung erkennt, dass auch bei drehsteif ausgebildeten Kupplungen - an sich technisch auf den ersten Blick widersinnig und in Abkehr von der Lehre des Standes der Technik - elastische Elemente bei geeigneter Wahl der Geometrie eingesetzt werden können, um einen Radialversatz ausgleichen zu können. Dies geschieht gemäß einer vorteilhaften Ausgestaltung dadurch, dass das elastische Element in Axialrichtung sehr kurz, beispielsweise nur 2 mm oder 4 mm breit ausgebildet ist, und in Radialrichtung eine demgegenüber viel größere Erstreckung, von beispielsweise 20 mm oder 40 mm aufweist.

Die radiale Erstreckung des elastischen Elementes beträgt dabei ein Mehrfaches, vorzugsweise ein 10- bis 100-faches, der axialen Erstreckung des elastischen Elementes. Das elastische Element selbst kann insbesondere kreisringscheibenförmig oder im Wesentlichen kreisringscheibenförmig ausgebildet sein. Es kann in Umfangsrichtung durchgängig ausgebildet sein, oder Unterbrechungen aufweisen. Bei einer Ausführungsform der Erfindung kann das elastische Element nach Art einer Kreisringscheibe ausgebildet sein. Es kann auch Ausnehmungen, insbesondere radial außen angeordnete Ausnehmungen zum Durchtritt von Befestigungselementen, wie Schrauben, aufweisen.

Die Erfindung löst die vorbeschriebene Aufgabe gemäß eines weiteren Aspektes mit den Merkmalen des Anspruches 2, insbesondere mit denen des Kennzeichenteils, und ist demgemäß dadurch gekennzeichnet, dass in dem Kraftleitungsweg zwischen den beiden Anschlüssen ein elastisches Element angeordnet ist, welches nach Art einer Gummispur ausgebildet ist, und eine Radialerstreckung aufweist, die mehr als doppelt so groß ist wie seine Axialerstreckung.

Zur Vermeidung von Wiederholungen wird auf die vorherigen Ausführungen und Merkmalsdefinitionen verwiesen, die zur Beschreibung der Erfindung nach Anspruch 2 in analoger Weise Anwendung finden.

Gemäß einer vorteilhaften Ausgestaltung der Erfindung besteht das elastische Element aus einer gummielastischen Masse. Insbesondere werden bekannte gummielastische Massen eingesetzt, die vulkanisationsfähig sind, und eine Shorehärte im Bereich von 80 +/- 10 aufweisen.

Gemäß einer weiteren vorteilhaften Ausgestaltung der Erfindung ist der erste Anschluss von einem Ringflansch bereitgestellt, der insbesondere eine Mehrzahl von umfangsverteilt angeordneten Befestigungsbohrungen aufweist. Hierdurch kann eine besonders einfache, spielfeie und Losflächen vermeidende Befestigung des ersten Anschlusses an den Antrieb - ohne Zwischenschaltung elastischer Elemente - vorgenommen werden. Dabei kann zugleich eine sehr geringe axiale Bauhöhe der Kupplung im Einbauzustand erreicht werden.

Gemäß einer weiteren vorteilhaften Ausgestaltung der Erfindung besteht der Ringflansch aus Metall oder aus einem hochfesten Kunststoff. Dies ermöglicht einen Rückgriff auf bekannte Werkstoffe, und die Ausbildung einer hoch drehsteifen Kupplung.

Gemäß einer weiteren vorteilhaften Ausgestaltung der Erfindung ist der zweite Anschluss von einer Nabe gebildet, die ein Nabenteil aus hochfestem Kunststoff oder aus Metall umfasst. Gemäß dieser Ausführungsform weist das zentrale Nabenteil, das auch als Nabenkern bezeichenbar ist, eine Innenverzahnung auf. Dieses innere Nabenteil kann als Bestandteil der Nabe umspritzt sein. Man spricht hier auch davon, dass das Nabenteil an die Nabe angespritzt ist. Die Nabe selbst weist neben dem zentralen, hochfesten Kern bei einer Ausführungsform einen radial nach außen vorstehenden Ringflansch auf. Der Ringflansch stellt eine Anvulkanisationsfläche an der Nabe bereit, die einer entsprechenden Anvulkanisationsfläche an dem ersten Anschluss gegenüber liegt. Dieses Flächenpaar kann parallel zueinander ausgerichtet sein.

Gemäß einer vorteilhaften Ausgestaltung der Erfindung ist das elastische Element an den ersten Anschluss anvulkanisiert und auch an den zweiten Anschluss anvulkanisiert. Dies ermöglicht eine besonders einfache Herstellung der erfindungsgemäßen Kupplung.

Gemäß einer weiteren vorteilhaften Ausgestaltung der Erfindung sind die Anvulkanisationsflächen an dem ersten Anschluss und an dem zweiten Anschluss im Wesentlichen entlang einer Radialebene ausgerichtet, insbesondere zueinander parallel oder im Wesentlichen parallel zueinander ausgerichtet. Dies ermöglicht die Ausbildung einer drehstarren oder hoch drehsteifen Kupplung.

Bei gattungsfremden drehweichen Kupplungen des Standes der Technik werden zwar elastische Elemente regelmäßig eingesetzt. Hier ist allerdings einerseits zu beobachten, dass deren Axialerstreckung etwa in der Größenordnung ihrer Radialerstreckung liegt. Zum anderen ist es bei drehweichen Kupplungen des Standes der Technik üblich, dass die Anvulkanisationsflächen für die elastischen Elemente nicht parallel zueinander ausgerichtet sind, sondern sich bei Betrachtung eines die Rotationsachse der Vorrichtung enthaltenen Querschnittes radial nach außen erweitern, um die Scherkräfte aufzunehmen.

Gemäß einer weiteren vorteilhaften Ausgestaltung der Erfindung ist das elastische Element im Wesentlichen kreisringscheibenförmig ausgebildet. Dies ermöglicht eine besonders einfache Herstellung einer erfindungsgemäßen Kupplung und die Bereitstellung und einfache und genaue Vorherbestimmung der gewünschten Eigenschaften der Kupplung im Sinne einer Radialweichheit und einer Drehsteifigkeit.

Gemäß einer weiteren vorteilhaften Ausgestaltung der Erfindung ist das elastische Element in Umfangrichtung durchgehend ausgebildet, oder im Wesentlichen durchgehend ausgebildet. Dies bietet eine einfache Herstellungsmöglichkeit.

Gemäß einer weiteren Ausgestaltung der Erfindung weist das elastische Element in Abweichung von einer kreisringscheibenförmigen Ausgestaltung Ausnehmungen auf. Die Ausnehmungen können insbesondere randseitig (d. h. radial außen liegend) angeordnete Ausnehmungen umfassen, um Schraubdurchführungen vorsehen zu können.

Gemäß einer - zu einer in Umfangsrichtung durchgehenden Ausgestaltung des elastischen Elementes - alternativen Ausgestaltung der Erfindung ist das elastische Element in Umfangsrichtung unterbrochen ausgebildet. Hier wird deutlich, dass zur Bereitstellung der gewünschten Radialweichheit aber Drehsteifigkeit der Kupplung, bzw. des elastischen Elementes, eine durchgehende Kreisringscheibenform nicht unbedingt erforderlich ist. Der in technischer Hinsicht gleiche Effekt kann auch mit einer Mehrzahl von inselförmig beabstandeten Flächen nach Art eines Fleckenmusters erreicht werden. Freilich ist dann die Herstellung unter Umständen aufwändiger, als wenn ein im Wesentlichen durchgehend ausgebildetes, kreisringscheibenförmiges, elastisches Element nach Art einer Gummispur vorgesehen wird.

Ein solches Fleckenmuster oder eine Mehrzahl derartiger Inseln können aber insgesamt eine Kreisscheibenringform nachbilden oder sich einer solchen annähern, um den gleichen physikalischen Effekt zu erreichen.

Gemäß einer weiteren vorteilhaften Ausgestaltung der Erfindung weist das elastische Element bei Betrachtung eines, eine Rotationsachse der Vorrichtung enthaltenen Querschnittes, eine radiale Erstreckung und eine axiale Erstreckung auf. Dabei ist vorgesehen, dass die radiale Erstreckung des elastischen Elementes mehr als doppelt so groß ist wie die axiale Erstreckung des elastischen Elementes. Diese Geometrie gewährleistet eine Ausbildung einer drehstarren, aber radial weichen Kupplung. Der Querschnitt des elastischen Elementes wird bei dieser angenäherten Betrachtung im Wesentlichen von einem Rechteck gebildet.

Die Begriffe radiale Erstreckung des elastischen Elementes und axiale Erstreckung des elastischen Elementes beziehen sich dabei auf diejenigen Materialabschnitte des elastischen Elementes, die unmittelbar zwischen dem einander gegenüberliegenden Paar von An-Vulkanisationsflächen angeordnet sind. Diejenigen Materialabschnitte des elastischen Elementes, die radial innenliegende Ringstirnbereiche eines Ringflansches oder radial außen befindliche Abschnitte eines radialen Nabenflansches übergreifen oder umgreifen, werden bei dieser vereinfachten und angenäherten Betrachtung außer Acht gelassen. Freilich sind von der Erfindung auch solche Ausführungsbeispiele umfasst, bei denen das elastische Element die zuvor erwähnten Materialabschnitte oder Bereiche aufweist.

Gemäß einer weiteren vorteilhaften Ausgestaltung der Erfindung verhält sich das Verhältnis der radialen Erstreckung zu der axialen Erstreckung wie ein Wert in einem Bereich zwischen 5:1 und 100:1. Insbesondere verhält sich das Verhältnis der radialen Erstreckung zu der axialen Erstreckung wie ein Wert in einem Bereich zwischen 5:1 und 50:1. Weiter insbesondere verhält sich das Verhältnis der radialen Erstreckung zu der axialen Erstreckung wie ein Wert in einem Bereich zwischen 5:1 und 20:1.

Gemäß einer vorteilhaften Ausgestaltung der Erfindung weist das elastische Element einen im Wesentlichen rechteckförmigen Querschnitt auf. Die Seitenlängen des Rechteckes sind von der axialen Erstreckung und der radialen Erstreckung gebildet.

Gemäß einer weiteren vorteilhaften Ausgestaltung der Erfindung erfolgt die Befestigung des ersten Anschlusses an dem Antrieb und/oder die Befestigung des zweiten Anschlusses an dem Abtrieb spielfrei, ohne Anordnung von Losflächen, und ohne Zwischenschaltung elastischer Elemente. Hierdurch kann gewährleistet werden, dass bei Auftreten eines Radialversatzes zwischen Antrieb und Abtrieb in einem Bereich von bis zu 1 mm ein Toleranzauffang durch das elastische Element erfolgt, ohne dass lose Flächen aneinander reiben, und ein Verschleiß eintritt. Die erfindungsgemäße Vorrichtung ist in dem angegebenen Radialtoleranzausgleichsbereich verschleißfrei betreibbar.

Die Erfindung betrifft gemäß einem weiteren Aspekt ein Modulbausystem für drehsteife, Radialversatz zulassende Kupplungen nach Anspruch 14.

Der Erfindung liegt die Aufgabe zugrunde ein Modulbausystem anzugeben, mit dem Kupplungen mit unterschiedlich dimensionierten Ringflanschen zum Zwecke der Anbringung an unterschiedliche Schwungräder von Motoren einfach hergestellt werden können.

Die Erfindung löst diese Aufgabe mit einem Modulbausystem nach Anspruch 14.

Das Prinzip der Erfindung besteht im Wesentlichen darin, dass eine erste Kupplung und eine zweite Kupplung bereitgestellt werden, wobei die erste Kupplung einen Ringflansch mit Abmessungen erster Art, und die zweite Kupplung einen Ringflansch mit Abmessungen zweiter, sich von den Abmessungen erster Art unterscheidender Art, aufweist. Die beiden Ringflansche können beispielsweise unterschiedliche Außendurchmesser, aber gleiche Innendurchmesser aufweisen.

Weiter ist vorgesehen, dass die beiden Vorrichtungen im Wesentlichen gleich dimensionierte Naben aufweisen.

Damit kann eine Fertigung von Kupplungen - je nach Bedarf der Dimensionierung des Ringflansches - mit gleichen Naben oder Nabenteilen und unterschiedlichen Ringflanschen vorgenommen werden. Eine solche Kupplungsfertigung kann in dem gleichen Werkzeug erfolgen. Der Bevorratungsaufwand wird erheblich reduziert.

Es ist nunmehr nur noch nötig, eine Nabe und zwei unterschiedliche Ringflansche zu bevorraten. Je nach Bedarf können diese dann in demselben Werkzeug unter Zwischenschaltung des elastischen Elementes miteinander durch Anvulkanisation verbunden werden.

Das erfindungsgemäße Modulsystem sieht dabei vor, dass trotz unterschiedlich dimensionierter Ringflansche geometrisch identisch ausgebildete An-Vulkanisationsflächen von den unterschiedlichen Ringflanschen bereitgestellt werden können, so dass bei Einlegen unterschiedlich dimensionierter Ringflansche in das gleiche Werkzeug immer ein gleicher, identischer oder zumindest ähnlicher kreisscheibenringförmiger Aufnahmeraum in dem Werkzeug bereitgestellt werden kann.

Die Erfindung betrifft schließlich ein Verfahren zur Herstellung einer drehstarren, Radialversatz zulassenden Kupplung, umfassend die Schritte:
a) Einlegen einer Nabe in ein Werkzeug,
b) Einlegen eines Ringflansches in ein Werkzeug,
c) Bereitstellen eines im wesentlichen kreisringscheibenförmigen Aufnahmeraumes für eine flüssige gummielastische Masse, wobei sich die radiale Erstreckung des Aufnahmeraumes im Verhältnis zu seiner axialen Erstreckung wie ein Wert in einem Bereich zwischen 3:1 und 100:1, insbesondere wie ein Wert in einem Bereich zwischen 5:1 und 50:1, verhält,
d) Einbringen einer gummielastischen Masse in den Aufnahmeraum und Aushärtenlassen der Masse unter Anvulkanisation der Masse an Grenzflächen, die von Nabe und Ringflansch bereitgestellt sind,
e) Öffnen des Werkzeuges und Entnehmen der so gebildeten Kupplungseinheit aus dem Werkzeug.

Das Verfahren umfasst die folgenden Schritte:
Gemäß Schritt a) wird eine Nabe in ein Werkzeug eingelegt.
Gemäß Schritt b) wird ein Ringflansch in ein Werkzeug eingelegt.

Die Nabe wird von einem Bauteil bereitgestellt, das zum Einsatz bei einer Kupplung gemäß Anspruch 1, d. h. zum Zwecke der Befestigung an einem Antrieb, geeignet ist.

Der Ringflansch stellt einen Anschluss im Sinne des Anspruches 1 zur Befestigung an dem Antrieb dar. Beispielsweise kann der Ringflansch kreisringscheibenförmig ausgebildet sein.

Das erfindungsgemäße Verfahren umfasst des weiteren den Schritt des Bereitstellens eines im Wesentlichen kreisringscheibenförmigen Aufnahmeraumes zum Aufnehmen einer flüssigen, gummielastischen Masse. Der kreisringscheibenförmige Aufnahmeraum befindet sich im in das Werkzeug eingelegten Zustand von Nabe und Ringflansch zwischen diesen beiden Elementen und beabstandet die beiden Elemente voneinander. Der Aufnahmeraum weist dabei eine radiale Erstreckung und eine axiale Erstreckung auf. Die Angaben radiale Erstreckung und axiale Erstreckung beziehen sich auf die Rotationsachse der fertiggestellten Kupplung.

Die Besonderheit besteht darin, dass sich die radiale Erstreckung des Aufnahmeraumes zu seiner axialen Erstreckung verhält, wie ein Wert in einem Bereich zwischen 3:1 und 100:1, insbesondere wie ein Wert in einem Bereich zwischen 5:1 und 50:1.

Gemäß dem erfindungsgemäßen Verfahren erfolgt des Weiteren der Schritt des Einbringens einer gummielastischen Masse in den Aufnahmeraum. Sodann lässt man die Masse aushärten, unter Anvulkanisation der Masse an denjenigen Grenzflächen, die von der Nabe und von dem Ringflansch bereitgestellt sind. Schließlich kann das Behältnis geöffnet, und die Kupplungseinheit aus dem Werkzeug entnommen werden.

Das erfindungsgemäße Verfahren revolutioniert die Herstellung einer drehsteifen Kupplung. Mit dem erfindungsgemäßen Verfahren ist es möglich, in ein und demselben Werkzeug unterschiedlich große Ringflansche mit gleichen Naben zu verbinden. Dies vereinfacht die Herstellung einer drehsteifen, einen Radialversatz zulassenden Kupplung erheblich.

Weitere Vorteile der Erfindung ergeben sich aus den nicht zitierten Unteransprüchen, sowie anhand der nachfolgenden Beschreibung der in den Zeichnungen dargestellten Ausführungsbeispiele. In den Zeichnungen zeigen:
- Fig. 1: in einer teilgeschnittenen, schematischen Ansicht ein erstes Ausführungsbeispiel einer erfindungsgemäßen Vorrichtung, sowie gestrichelt dargestellt ein Schwungrad eines Motors, Schraubbefestigungselemente zur Festlegung des Ringflansches an dem Schwingrad und weiter gestrichelt dargestellt eine mit der Nabe verbundene Welle und ein abgebrochen gestrichelt dargestelltes Getriebe,
- Fig. 2: das Ausführungsbeispiel der Vorrichtung gemäß Fig. 1, etwa gemäß Ansichtspfeil II in Fig. 1, in vereinfachter Prinzipdarstellung,
- Fig. 3: die Vorrichtung der Fig. 1 in einer Rückansicht etwa gemäß Ansichtspfeil III in Fig. 1 in vereinfachter, schematischer Darstellung,
- Fig. 4: in einer schematischen, perspektivischen Ansicht die Vorrichtung der Fig. 1 etwa entlang Ansichtspfeil IV in Fig. 1,
- Fig. 5: das Ausführungsbeispiel der Fig. 1 in auseinandergezogener Darstellung vor dem Zusammenbau,
- Fig. 5a: in Alleindarstellung einen geänderten Ringflansch mit gegenüber der Fig. 5 geänderten Dimensionen,
- Fig. 6: in einer vereinfachten Prinzipdarstellung den Ringflansch der Fig. 5 in Einzeldarstellung, etwa gemäß Ansichtspfeil VI in Fig. 5, mit zusätzlich dargestelltem, elastischem Element,
- Fig. 7: ein weiteres Ausführungsbeispiel zur Veranschaulichung einer geänderten Geometrie des elastischen Elementes in einer Darstellung gemäß Fig. 6,
- Fig. 8: ein weiteres Ausführungsbeispiel einer erfindungsgemäßen Vorrichtung zur Veranschaulichung eines geänderten elastischen Elementes in einer Darstellung gemäß Fig. 6,
- Fig. 9: in einer schematischen, vergrößerten Ausschnittsdarstellung einen Verbindungsbereich der Vorrichtung der Fig. 1 zwischen Ringflansch und Nabenflansch zur Veranschaulichung der Geometrie des elastischen Elementes, stark vergrößert, etwa gemäß Teilkreis IX in Fig. 1,
- Fig. 10: ein weiteres Ausführungsbeispiel einer erfindungsgemäßen Vorrichtung in einer Darstellung gemäß Fig. 1 mit einer gegenüber dem Ausführungsbeispiel der Fig. 1 geänderten Geometrie des Querschnittes des elastischen Elementes und einem geänderten Nabenteil,
- Fig. 11: ein weiteres Ausführungsbeispiel einer erfindungsgemäßen Vorrichtung in einer Darstellung gemäß Fig. 10 mit einem wiederum geänderten Nabenteil,
- Fig. 12: das Ausführungsbeispiel der Fig. 11 in einer Ansichtsdarstellung gemäß Ansichtspfeil XII in Fig. 11, und
- Fig. 13: das Ausführungsbeispiel der Fig. 11 in einer schematischen, perspektivischen Ansicht, etwa entlang Ansichtspfeil XIII in Fig. 11.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

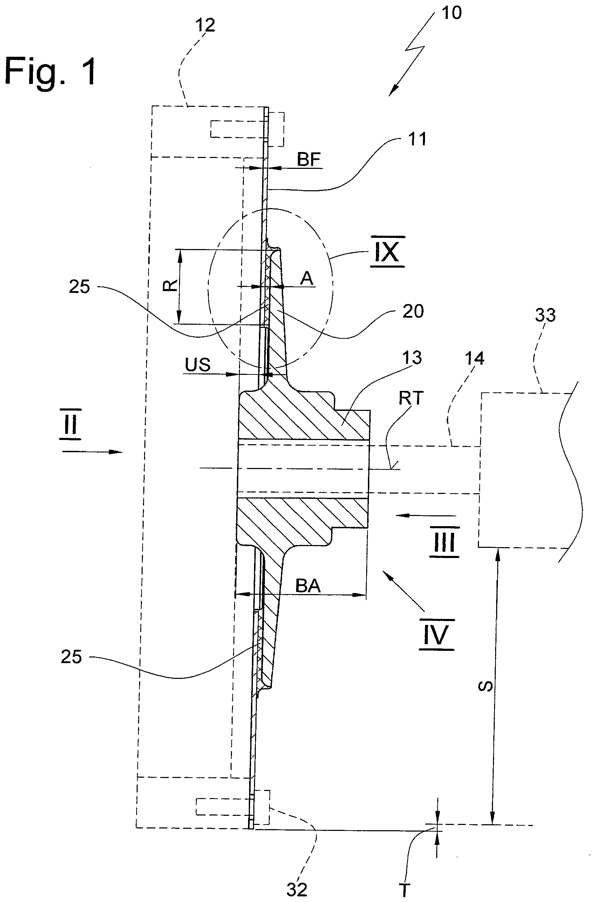

Ein erstes Ausführungsbeispiel einer erfindungsgemäßen Vorrichtung zeigt Fig. 1 und ist dort in seiner Gesamtheit mit 10 bezeichnet.

Die Vorrichtung umfasst einen ersten Anschluss 11, der bei dem Ausführungsbeispiel als Ringflansch ausgebildet ist. Der Ringflansch kann aus Metall oder aus einem hochfesten Kunststoff bestehen.

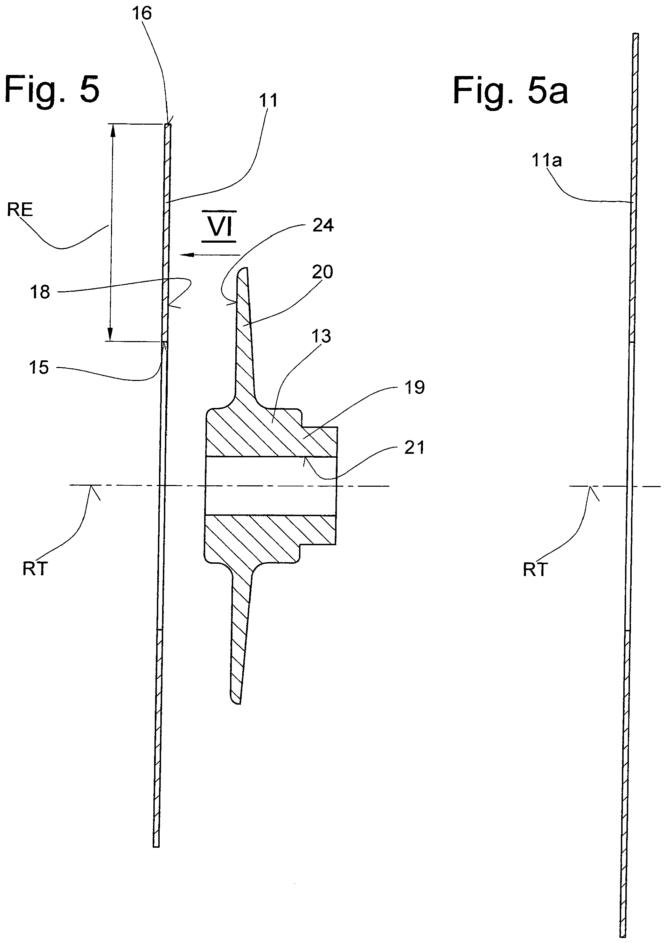

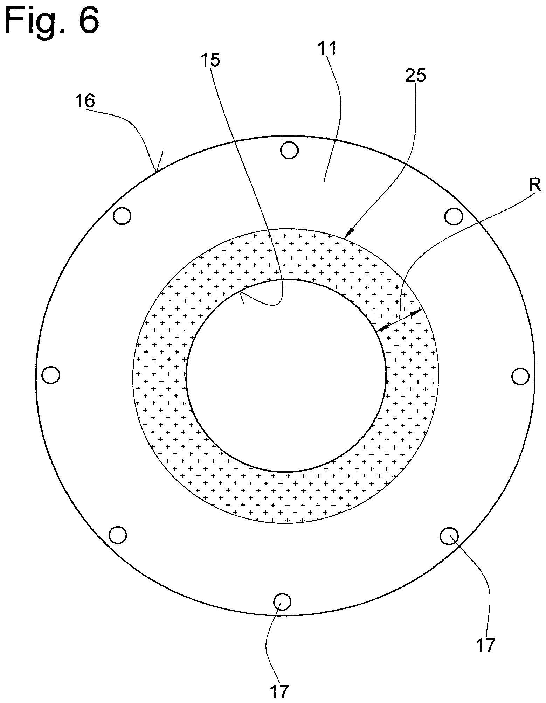

Unter Bezugnahme insbesondere auf die Figuren 5 und 6 wird deutlich, dass der ringförmige Flansch 11 eine Innenumfangsfläche 15 und eine Außenumfangsfläche 16 aufweist.

Die radiale Erstreckung des Ringflansches 11 wird mit dem Bezugszeichen RE bezeichnet.

Weiter erkennt man, dass radial außen, umfangsverteilt angeordnet, eine Mehrzahl von Befestigungsbohrungen 17 vorgesehen sind. Bei dem Ausführungsbeispiel sind, wie aus Fig. 6 ersichtlich, acht Befestigungsbohrungen 17 vorgesehen, wobei die Zahl der Bohrungen selbstverständlich in das Belieben des Fachmanns gestellt ist.

Der Ringflansch 11 weist eine axiale Erstreckung auf, die mit BF bezeichnet ist (Fig. 1).

Fig. 1 deutet - lediglich sehr schematisch und gestrichelt - ein Schwungrad 12 eines Motors an, an dem der Ringflansch 11 über angedeutete Schrauben 32 unmittelbar - ohne Zwischenschaltung elastischer Elemente - befestigt werden kann. Das Schwungrad 12 stellt den Antrieb der Vorrichtung dar.

Die Vorrichtung 10, die im Rahmen dieser Patentanmeldung synonym auch als Kupplung bezeichnet wird, dient zur Übertragung von Drehmomenten von dem Antrieb 12 auf einen Abtrieb 14.

Der Abtrieb 14 ist eine in Fig. 1 lediglich schematisch, abgebrochen und gestrichelt dargestellte Welle 14, die mit einem angedeutet dargestellten Getriebe 33 verbunden werden kann.

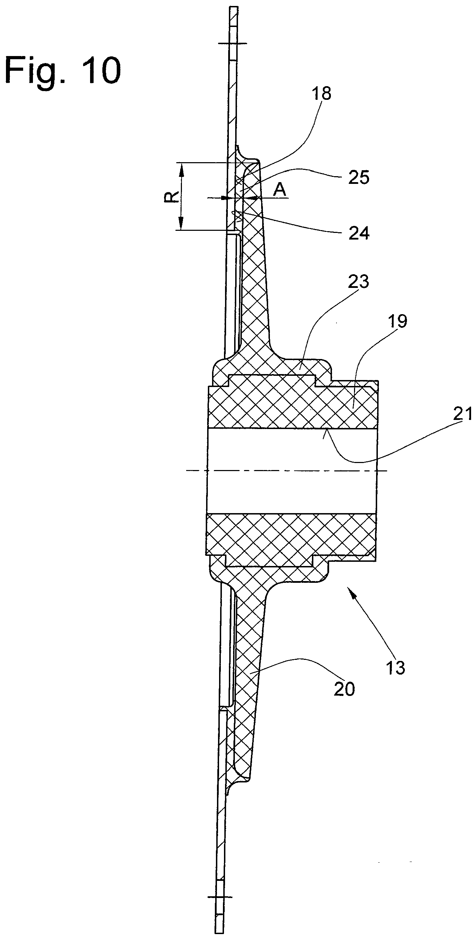

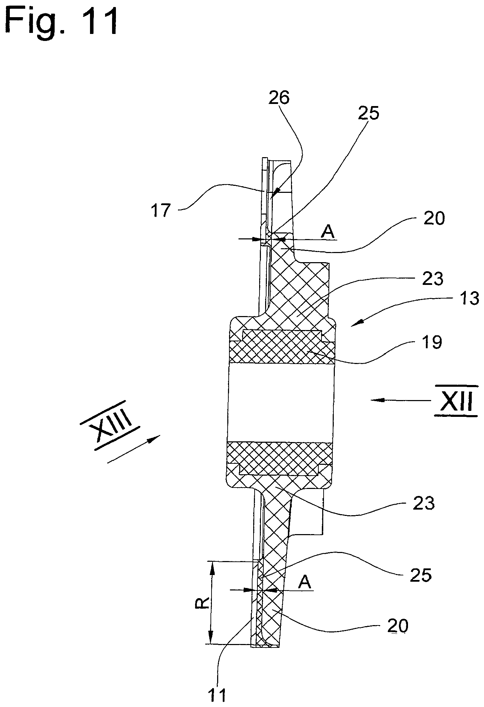

Zur Verbindung mit der Welle 14 weist die Vorrichtung 10 einen zweiten Anschluss 13 in Form einer Nabe auf. Die Nabe 13 kann - wie das Ausführungsbeispiel der Fig. 1 andeutet - beispielsweise einteilig ausgebildet sein. Sie kann allerdings auch, wie später noch anhand der Ausführungsbeispiele der Figuren 10 und 11 erläutert wird, aus mehreren Teilen bestehen.

Die Nabe 13 weist insgesamt betrachtet ein Nabenzentrum 19, also ein im Wesentlichen ballig geformtes, radial innen oder zentral angeordnetes Teil 19 und einen Nabenflansch 20 auf, der radial nach außen vorsteht.

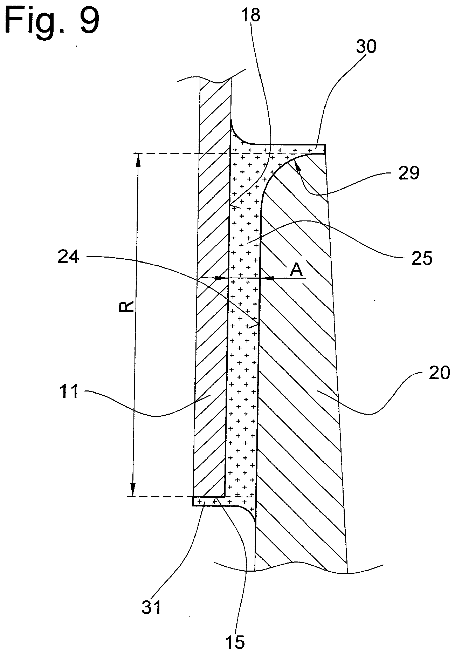

Sowohl an dem Ringflansch 11, als auch an dem Nabenflansch 20 der Nabe 13, befinden sich Anvulkanisationsflächen 18, 24, die beispielsweise in Fig. 9 zu sehen sind. Die Anvulkanisationsfläche 18 und auch die Anvulkanisationsfläche 24 ist jeweils entlang einer Radialebene angeordnet. Die beiden Flächen 18, 24 sind im Wesentlichen parallel zueinander ausgerichtet. Der Begriff Radialebene bedeutet, dass die Ebene durch einen Normalenvektor gekennzeichnet ist, der parallel zu der Rotationsachse RT der Vorrichtung ausgerichtet ist.

Die Anvulkanisationsflächen 18, 24 dienen zur Befestigung eines elastischen Elementes 25. Dieses ist nach Art einer Gummispur ausgebildet und weist eine im Wesentlichen kreisringscheibenförmige Raumform auf.

Wie sich insbesondere bei Betrachtung der Figuren 1 und 9 ergibt, ist das elastische Element 25 mit einem im Wesentlichen rechteckförmigen Querschnitt ausgestattet. Der Querschnitt wird durch ein Rechteck der Seitenlängen A und R gebildet, wobei mit A die axiale Erstreckung des elastischen Elementes und mit R die radiale Erstreckung des elastischen Elementes 25 bezeichnet ist.

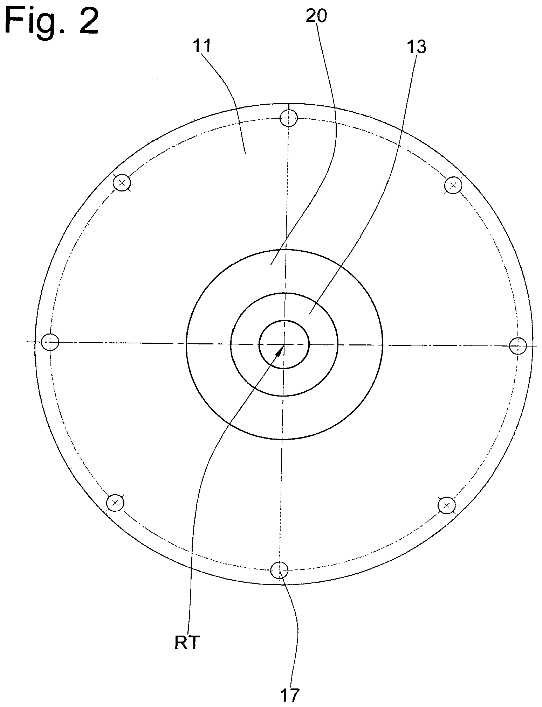

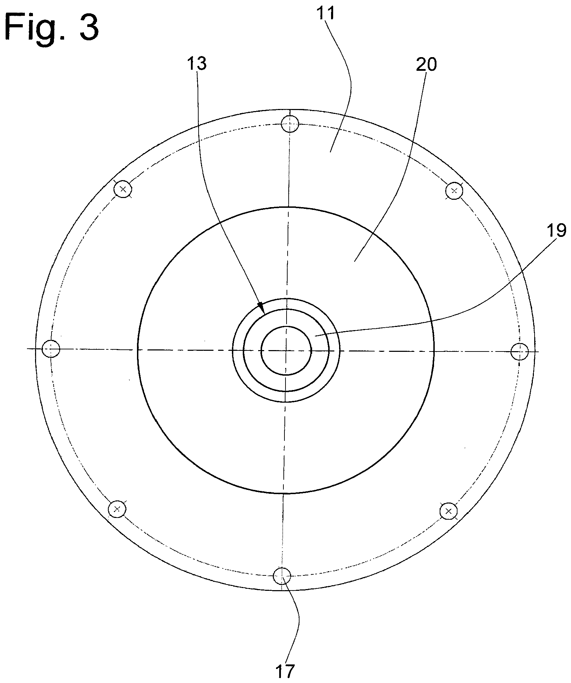

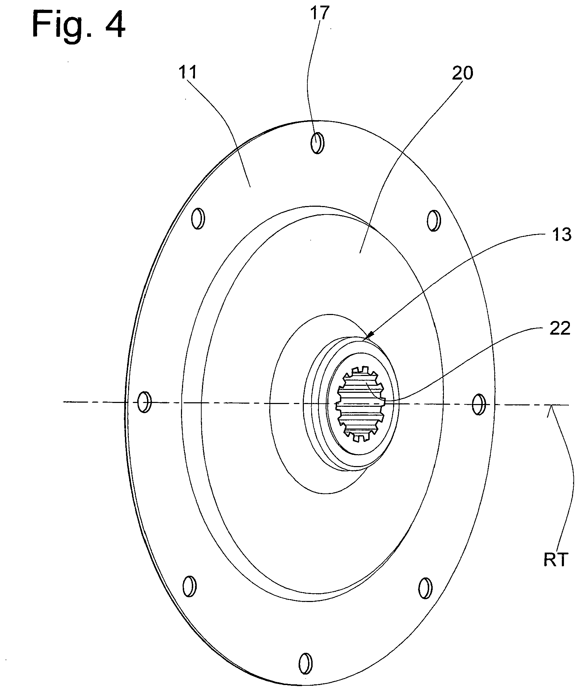

Bei den Ausführungsbeispielen der Figuren 1 bis 6, 9 und 10 ist das elastische Element 25 von einem im Wesentlichen durchgehenden, d. h. in Umfangsrichtung umlaufenden, im Wesentlichen konstanten Querschnitt gebildet. Dessen Geometrie ist insoweit einer Kreisringscheibenform nahezu ideal angenähert.

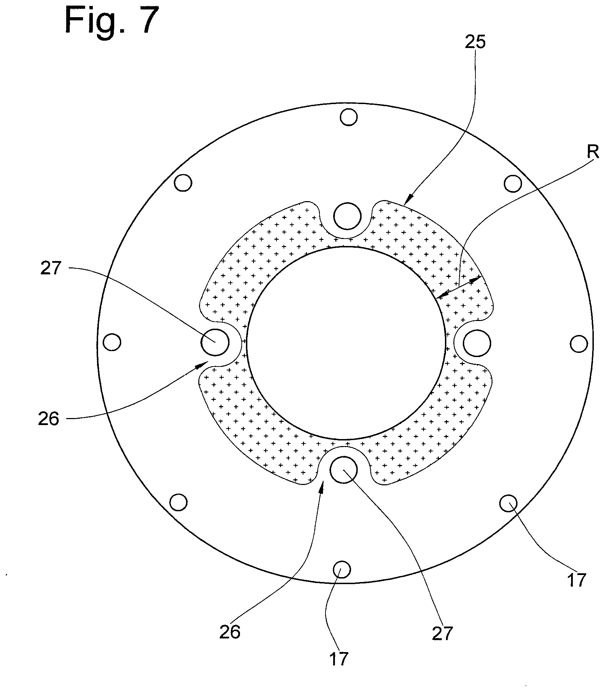

Bei dem Ausführungsbeispiel der Fig. 7 ist das elastische Element 25 unter Bereitstellung einer Kreisringscheibenform in Umfangsrichtung ebenfalls durchgehend ausgebildet, weist aber Randausnehmungen 26 für die Bereitstellung von weiteren Befestigungsbohrungen 27 auf.

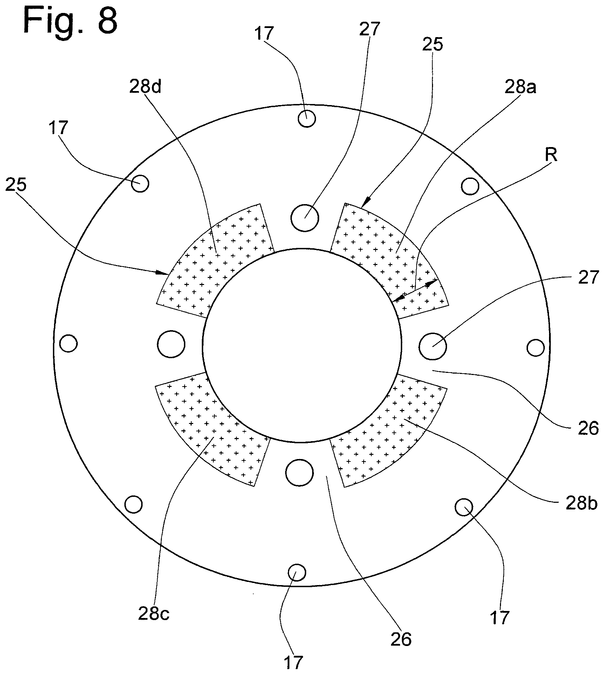

Bei dem Ausführungsbeispiel der Fig. 8 ist das elastische Element 25 von mehreren Segmenten 28a, 28b, 28c, 28d gebildet, und insoweit unterbrochen, bezogen auf die Umlaufrichtung, ausgebildet. Auch hier ist das elastische Element 25 im Sinne der Erfindung noch im Wesentlichen kreisringscheibenförmig ausgebildet.

Die Kupplung 10 gemäß Fig. 1 ermöglicht eine Übertragung von Drehmomenten von dem Antrieb 12 auf den Abtrieb 14, wobei größere Verdrehwinkel als 0,5 Grad im zu erwartenden Arbeitsbereich der Kupplung verhindert werden. Die Kupplung 10 der Fig. 1 ist insoweit torsionssteif oder drehsteif ausgebildet.

Bei den typischerweise in dem Arbeitsbetrieb der Kupplung 10 zu erwartenden, auftretenden Drehmomenten oder Drehmomentunterschieden sind Verdrehwinkel zwischen dem Antrieb 12 und der Welle 14, und somit Umfangswinkelversätze zwischen dem Ringflansch 11 und der Nabe 13 von ca. 0,5° zu gewährleisten.

Hierfür sorgt das mit einer nur sehr kurzen, axialen Erstreckung A ausgestattete elastische Element 25. Das elastische Element 25 ist also in Axialrichtung so dünn ausgebildet, dass es in Umfangsrichtung nahezu unelastisch ist. Die beiden Anvulkanisationsflächen 18, 24 sind durch das in Axialrichtung dünn gehaltene elastische Element 25 also in Umfangsrichtung drehsteif miteinander verbunden.

Auf Grund von Fertigungs- und Montagetoleranzen kann ein Radialversatz zwischen Antrieb 12 und Welle 14 (bzw. dem der Welle 14 in Kraftleitungsweg nachgeschalteten Element des Antriebsstranges, z. B. einem Getriebe 33, insbesondere einem Verteilergetriebe) auftreten.

Fig. 1 deutet einen Sollabstand S zwischen Schwungrad 12 und Getriebe 33 an. Gleichermaßen könnte dieser Sollabstand S auch zwischen Schwungrad 12 und Getriebe 14 gemessen werden. Fachmännisch würde man im Übrigen einen solchen Sollabstand immer auf die Soll-Drehachsen von Schwungrad 12 und Getriebe 33, bzw. Welle 14 beziehen.

Von diesem Sollabstand kann entlang einem Toleranzbereich T in Radialrichtung abgewichen werden. Dies hängt beispielsweise damit zusammen, dass auf Grund des heutzutage in dem vornehmlichen Anwendungsbereich der erfindungsgemäßen Kupplung zu beobachtende Trend zum Leichtbau von hydrostatischen Antrieben und nachgeschalteten Verteilergetrieben größere Fertigungs- und Montagetoleranzen, ggf. auch betriebsbedingte Toleranzen, auftreten können.

Um diesen Radialversatz, der in Fig. 1 als Toleranz T bezeichnet ist, auszugleichen, ist erfindungsgemäß eine große radiale Erstreckung des elastischen Elementes 25 - im Verhältnis zu seiner sehr kurzen axialen Erstreckung - vorgesehen.

Gemäß der Erfindung ist ein Radialtoleranzausgleich nunmehr verschleißfrei möglich, da die Radialversätze beim Betrieb der Kupplung zu einer Verformungsarbeit ausschließlich innerhalb des elastischen Elementes 25 führen.

In dem vornehmlichen Anwendungsbereich der erfindungsgemäßen Kupplung kann nun ein Toleranzausgleich bis zu maximalen Toleranzen von 0,5 mm bis 1 mm erreicht werden. Dies liegt erheblich oberhalb des bei Kupplungen des Standes der Technik möglichen Toleranzausgleiches.

Bei dem Ausführungsbeispiel der Fig. 1 kann der erste Anschluss 11 kann starr mit dem Antrieb 12 verbunden werden, wobei hier auf Zwischenschaltung elastischer Elemente gänzlich verzichtet werden kann, und insbesondere auch Losflächen vermieden werden können.

Auch die Nabe 13 kann ohne Zwischenschaltung elastischer Elemente, und ohne das Bereitstellen von Losflächen fest mit der Welle 14 verbunden werden.

Hierzu kann die Nabe 13 innenseitig mit einer Innenverzahnung 22 ausgestattet sein. Die Innenverzahnung 22 kann mit einer nicht dargestellten Außenverzahnung an der Welle 14 zusammenwirken. Die Welle 14 und Nabe 13 werden axial ineinander gesteckt und sind dann unter Bereitstellung eines Drehschlusses und unter Vermeidung von Losflächen aneinander festgelegt.

An dieser Stelle sei angemerkt, dass - wie sich insbesondere aus der Darstellung der Fig. 10 ergibt - bei Varianten der Erfindung das Nabenzentrum 19, also das radial innere Teil der Nabe 13, aus einem gesonderten Werkstück, insbesondere aus Metall oder aus einem hochfesten Kunststoff gefertigt ist. Die Nabe 13 wird dann dadurch gebildet, dass das Nabenzentrum 19 von einem Kunststoff, insbesondere von einem weicheren, preiswerteren Kunststoff unter Bildung des Nabenflansches 20 und einer Spritzumhüllung 23, die das Nabenzentrum 19 umgibt, gespritzt wird.

Freilich sind auch andere Herstellungsformen von der Erfindung mit umfasst.

Die Innenumfangsfläche 21 des Nabenzentrums 19 kann entweder bereits bei der Herstellung des gesonderten Werkstückes 19 mit einer Verzahnung 22 versehen sein. Alternativ kann erst nach Herstellung des Nabenzentrums 19 durch Bearbeitung eines Räumwerkzeuges die Verzahnung in das Werkstück eingearbeitet werden.

Die Erfindung ermöglicht eine Bereitstellung einer drehsteifen, aber Radialversatz ausgleichenden Kupplung mit einer sehr kurzen axialen Gesamtbauhöhe BA (vgl. Fig. 1). Dabei zeigt das Ausführungsbeispiel der Fig. 1 eine Ausführungsform, bei der ein Überstand US der Nabe 13 gegenüber der Kontur des ersten Anschlusses 11, bezogen auf Fig. 1, nach links, also hin zu dem Antrieb 12, vorgesehen ist. Ein solcher Überstand US kann bei anderen Ausführungsbeispielen auch entfallen, oder - je nach Anwendungssituation - auch vergrößert werden, z. B. um den auf der gegenüberliegenden Seite bei dem Ausführungsbeispiel der Fig. 1 vorgesehenen Überstand zu reduzieren.

Die vergrößerte Ausschnittsdarstellung der Fig. 9 macht deutlich, dass die radial äußersten Bereiches des Nabenflansches 20 mit Krümmungsbereichen 29 ausgestattet sein können. Diese Stirnbereiche des Nabenflansches 20 können von der gummielastischen Masse 25 auch übergriffen oder teilweise übergriffen werden, wobei diese Übergreifungsbereiche mit 30 bezeichnet sind.

Auch die radial innenliegenden Bereiche des Ringflansches 11 können, wie dies Fig. 9 darstellt, von Abschnitten der gummielastischen Masse 25 radial innenseitig übergriffen werden, und Übergreifungsbereiche 31 ausbilden. Hierdurch kann die Fertigung der erfindungsgemäßen Kupplung erleichtert werden.

Die Übergreifungsbereiche 30, 31 sind allerdings bei diesem Ausführungsbeispiel - was ihren Einfluss auf die Ausgestaltung der radial weichen, aber drehsteifen Ausbildung der Kupplung insgesamt angeht - zu vernachlässigen.

Die gemäß der Erfindung geforderten Elastizitätseigenschaften des elastischen Elementes 25 im Sinne der Erzielung einer drehsteifen, aber radial weichen Kupplung werden im Wesentlichen durch den Querschnitt des im Wesentlichen rechteckförmigen Gummielementes 25 bereitgestellt, wobei hier das Verhältnis seiner Radialerstreckung zu seiner Axialerstreckung maßgeblich ist.

Fig. 9 macht auch deutlich, dass der Kraftfluss von dem ersten Anschluss 11 (Ringflansch) zu dem zweiten Anschluss 13 (Nabe) ausschließlich durch das gummielastische Element 25 hindurch erfolgt.

Schließlich macht Fig. 9 auch in besonderem Maße deutlich, dass die Anvulkanisatiosflächen 18, 24 im Wesentlichen parallel zueinander angeordnet sind.

Die Übergreifungsbereiche 30, 31 sind auch diesbezüglich dabei unmaßgeblich und können bei der Betrachtung ausgeblendet werden.

Schließlich macht Fig. 9 deutlich, dass der Kraftfluss von dem ersten Anschluss 11 zu dem zweiten Anschluss 13 ausschließlich in Axialrichtung erfolgt.

In diesem Zusammenhang sei angemerkt, dass von der Erfindung auch Ausführungsbeispiele umfasst sind, bei denen ein Kraftfluss zwischen dem ersten Anschluss 11 und dem zweiten Anschluss 13 im Wesentlichen in Radialrichtung erfolgt. Bei diesem Ausführungsbeispiel sind die Anvulkanisationsflächen vorzugsweise entlang von Mantelflächen eines Kreiszylinders gebildet. Solche Ausführungsformen weisen allerdings eine sehr viel größere axiale Bauhöhe auf, und sind z. B. für solche Anforderungen interessant, bei denen sehr geringe radiale Bauhöhen von Kupplungen gewünscht sind, es aber auf die axiale Bauhöhe der Kupplung nicht ankommt.

Bei dem Ausführungsbeispiel der Fig. 10 wird deutlich, dass das Verhältnis zwischen radialer Erstreckung und axialer Erstreckung des elastischen Elementes 25 gegenüber dem Ausführungsbeispiel der Fig. 1 geändert worden ist. Dieses Ausführungsbeispiel weist ein Verhältnis von radialer Erstreckung zu axialer Erstreckung auf, welches etwa in einem Bereich von 8 liegt, wohingegen dieser Wert bei dem Ausführungsbeispiel der Fig. 1 etwa bei 18 liegt.

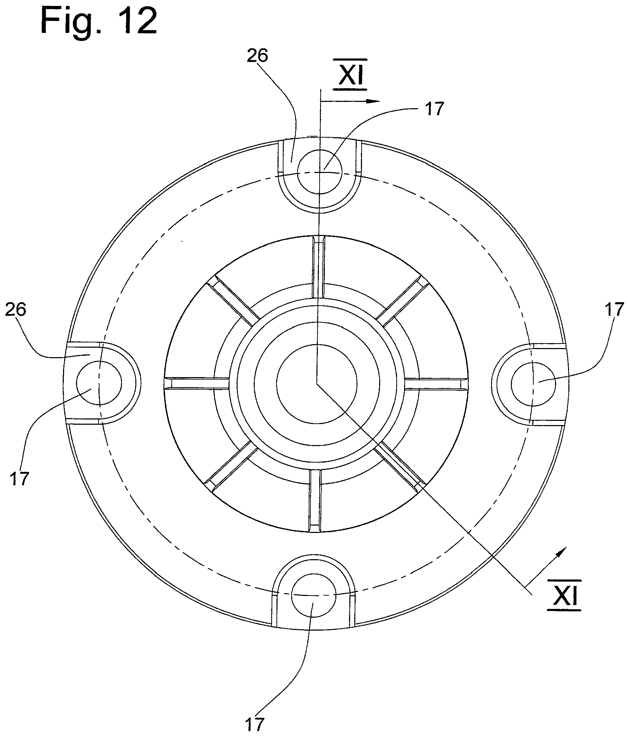

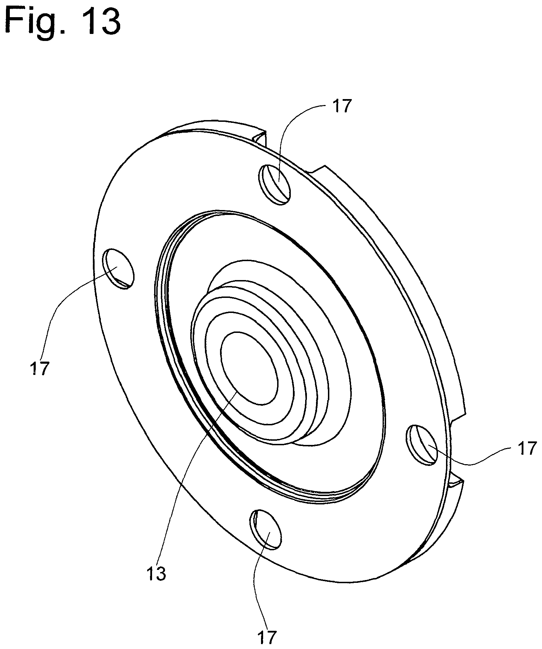

Während die Ausführungsbeispiele der Fig. 7 und der Figuren 11 bis 13 zwar unterschiedlich sind, ist diesen beiden Ausführungsbeispielen doch gemeinsam, dass hier jeweils elastische Elemente 25 vorgesehen sind, die Randausnehmungen 26 aufweisen. Hierdurch kann eine besonders einfache Befestigungsmöglichkeit und Positionierung von Befestigungsöffnungen 27, bzw. 17 geschaffen werden. Bei den Ausführungsbeispiel der Figuren 11 bis 13 sind die Befestigungsbohrungen radial außen vorgesehen. Hier ist auch eine Positionierung des elastischen Elementes 25 in Radialrichtung relativ weit außen vorgesehen, wobei hier Nabenflansch 20 und Ringflansch 11 etwa den gleichen Außendurchmesser aufweisen. Bei dem Ausführungsbeispiel der Fig. 7 sind zusätzliche radial innenliegende Befestigungsbohrungen 27 vorgesehen.

Anhand folgender Überlegungen soll nunmehr noch der Aspekt der Bereitstellung eines Modulbausystems gemäß der Erfindung und eines Herstellungsverfahrens für eine erfindungsgemäße Kupplung erläutert werden:
Zunächst wird der zweite Anschluss 13, also die Nabe, z. B. gemäß Fig. 5, in eine nicht dargestellte Werkzeugform gelegt. Dabei ist es für die Erfindung unerheblich, ob die Nabe 13 einheitlich aus einem hochfesten Kunststoff, oder aus Metall gebildet ist. In einem der Herstellung der erfindungsgemäßen Kupplung vorhergehenden Bearbeitungsschritt kann auch ein hochfestes inneres Nabenteil oder Nabenzentrum 19 aus Metall oder hochfestem Kunststoff bereitgestellt worden sein, welches von einer Umspritzung zur Bereitstellung von Nabenflansch 13 und Spritzumhüllung 23 umgeben ist.

Entscheidend für die Anwendung des erfindungsgemäßen Verfahrens ist, dass der zweite Anschluss 13 ein einstückiges Bauteil bereitstellt, welches eine Anvulkanisationsfläche 24 aufweist, und im Wesentlichen einstückig ausgebildet ist. Dieses Bauteil 13 wird in eine Werkzeugform gelegt.

Des Weiteren wird der erste Anschluss 11, insbesondere ein Ringflansch, in die gleiche Werkzeugform gelegt. Die Werkzeugform weist dafür Positionierungsflächen auf, die gewährleisten, dass nach dem Einlegen der Nabe und des Ringflansches in das Werkzeug ein im Wesentlichen kreisringscheibenförmiger Raum verbleibt, der die beiden Anschlüsse 11, 13 voneinander beabstandet. Der kreisringscheibenförmige Aufnahmeraum kann dabei durchgehend, d. h. ununterbrochen ausgebildet sein, oder unterbrochen ausgebildet sein. Er kann auch Ausnehmungen aufweisen.

Das Werkzeug wird sodann geschlossen, und eine flüssige, gummielastische Masse wird in den Aufnahmeraum eingebracht. Bei alternativen Varianten des erfindungsgemäßen Herstellungsverfahrens wird zunächst die gummielastische Masse in flüssiger Form eingebracht und danach das Werkzeug verschlossen. Das Eindringen der gummielastischen Masse kann auch unter Druck erfolgen, so dass von einem Einspritzen gesprochen werden kann.

Nach dem Einbringen der flüssigen gummielastischen Masse in den kreisringscheibenförmigen Aufnahmeraum kann die Masse aushärten. Im Zuge des Aushärtungsvorganges anvulkanisiert die gummielastische Masse unter Ausbildung eines gummielastischen Elementes 25 an den Anvulkanisationsflächen.

Nachfolgend kann das Werkzeug geöffnet und die so gebildete Kupplungseinheit aus dem Werkzeug entnommen werden. Die Kupplung ist formfallend, d. h. es sind keine weiteren Nachbearbeitungsschritte an der Kupplung mehr erforderlich.

Das erfindungsgemäße Herstellungsverfahren ermöglicht die Verwendung des gleichen Werkzeuges zur Ausbildung und Herstellung unterschiedlicher Kupplungen mit beispielsweise unterschiedlich dimensionierten Ringflanschen 11.

So kann beispielsweise immer das gleiche Nabenteil 13 in die Werkzeugform eingesetzt werden. Es können aber unterschiedlich große, d. h. unterschiedlich dimensionierte Ringflansche 11 eingesetzt werden. Beispielsweise kann ein erster Ringflansch 11 mit einem großen Außendurchmesser zur Bereitstellung einer ersten Kupplungsgröße, und ein zweiter Ringflansch 11 mit gleichem Innendurchmesser bei einem demgegenüber geänderten Außendurchmesser vorgesehen werden. Entscheidend ist, dass der Überlappungsbereich oder Überdeckungsbereich der beiden Anvulkanisationsflächen 18, 24 bei den unterschiedlichen Kupplungsgrößen gleich ist. Hierdurch wird ein Modulbausystem zur Herstellung drehsteifer, aber Radialversatz zulassender Kupplungen bereitgestellt, welches eine besonders einfache Möglichkeit einer Herstellung von Kupplungen unterschiedlicher Baugrößen zulässt.

Fig. 5a stellt einen Kupplungsflansch eines Ringflansches 11a dar, der einen größeren Außendurchmesser aufweist, aber im Übrigen identisch zu dem Ringflansch 11 der Fig. 5 ausgebildet ist. Es wird ohne weiteres deutlich, dass der Ringflansch 11a bei einer Kupplung gemäß Fig. 1 den dort mit 11 bezeichneten Ringflansch ersetzen kann. Zur Herstellung einer solchen Kupplung mit einem demgegenüber größeren, geänderten Ringflansch 11a, kann das gleiche Werkzeug wie zur Herstellung einer Kupplung nach Fig. 5 verwendet werden.

## Patentansprüche

1. Vorrichtung (10) zur Übertragung von Drehmomenten von einem Antrieb (12) zu einem Abtrieb (14), umfassend einen ersten Anschluss (11), insbesondere einen Flansch, zur Verbindung mit dem Antrieb, und einen zweiten Anschluss (13), insbesondere eine Nabe, zur Verbindung mit dem Abtrieb, wobei in dem Kraftleitungsweg zwischen den beiden Anschlüssen ein elastisches Element (25) angeordnet ist, welches radialweich, einen Radialversatz zwischen dem ersten Anschluss und dem zweiten Anschluss zulassend, ausgebildet ist, **dadurch gekennzeichnet, dass** das elastische Element zugleich auch drehsteif, einen nur sehr kleinen Verdrehwinkel zwischen dem ersten Anschluss und dem zweiten Anschluss zulassend, ausgebildet ist.

2. Vorrichtung (10) zur Übertragung von Drehmomenten von einem Antrieb (12) zu einem Abtrieb (14), insbesondere nach Anspruch 1, umfassend einen ersten Anschluss (11), insbesondere einen Flansch, zur Verbindung mit dem Antrieb, und einen zweiten Anschluss (13), insbesondere eine Nabe, zur Verbindung mit dem Abtrieb, wobei die Vorrichtung im wesentlichen drehsteif ausgebildet ist, **dadurch gekennzeichnet, dass** in dem Kraftleitungsweg zwischen den beiden Anschlüssen ein elastisches Element (25) angeordnet ist, welches nach Art einer Gummispur (25) ausgebildet ist, und eine Radialerstreckung (R) aufweist, die mehr als doppelt so groß, insbesondere mehr als 5 mal so groß, ist, wie seine Axialerstreckung (A).

3. Vorrichtung nach einem der vorangegangenen Ansprüche, **dadurch gekennzeichnet, dass** das elastische Element (25) aus einer gummielastischen Masse besteht.

4. Vorrichtung nach einem der vorangegangenen Ansprüche, **dadurch gekennzeichnet, dass** der erste Anschluss (11) von einem Ringflansch bereitgestellt ist, der insbesondere eine Mehrzahl von umfangsverteilt angeordneten Befestigungsbohrungen (17) aufweist.

5. Vorrichtung nach Anspruch 4, **dadurch gekennzeichnet, dass** der Ringflansch (11) aus Metall oder aus einem hochfesten Kunststoff besteht.

6. Vorrichtung nach einem der vorangegangenen Ansprüche, **dadurch gekennzeichnet, dass** der zweite Anschluss von einer Nabe (13) gebildet ist, die ein Nabenteil (19) aus hochfestem Kunststoff oder aus Metall umfasst.

7. Vorrichtung nach Anspruch 6, **dadurch gekennzeichnet, dass** die Nabe (13) eine Innenverzahnung (22) aufweist, insbesondere zum Zwecke der Erzielung einer steckbaren Verbindung mit einer Welle (14).

8. Vorrichtung nach Anspruch 6 oder Anspruch 7, **dadurch gekennzeichnet, dass** das Nabenteil (19) als Bestandteil der Nabe (13) an diese angespritzt ist.

9. Vorrichtung nach einem der vorangegangenen Ansprüche, **dadurch gekennzeichnet, dass** das elastische Element (25) an den ersten Anschluss (11) anvulkanisiert ist und an den zweiten Anschluss (13) anvulkanisiert ist.

10. Vorrichtung nach Anspruch 9, **dadurch gekennzeichnet, dass** an dem ersten Anschluss (11) und an dem zweiten Anschluss (13) An-Vulkanisationsflächen (18, 24) angeordnet sind, die insbesondere jeweils im Wesentlichen entlang einer Radialebene ausgerichtet sind, und die insbesondere zueinander parallel oder im Wesentlichen parallel zueinander ausgerichtet sind.

11. Vorrichtung nach einem der vorangegangenen Ansprüche, **dadurch gekennzeichnet, dass** das elastische Element (25), bei Betrachtung eines, eine Rotationsachse (RT) der Vorrichtung enthaltenden Querschnittes, eine radiale Erstreckung (R) und eine axiale Erstreckung (A) aufweist, wobei die radiale Erstreckung (R) mehr als doppelt so groß, insbesondere mehr als 5 mal so groß, ist, wie die axiale Erstreckung (A).

12. Vorrichtung nach Anspruch 11, **dadurch gekennzeichnet, dass** sich das Verhältnis der radialen Erstreckung (R) zu der axialen Erstreckung (A) wie ein Wert in einem Bereich zwischen 5:1 und 100:1, insbesondere wie ein Wert in einem Bereich zwischen 5:1 und 50:1, weiter insbesondere wie ein Wert in einem Bereich zwischen 5:1 und 10:1 verhält.

13. Vorrichtung nach einem der vorangegangenen Ansprüche, **dadurch gekennzeichnet, dass** die Befestigung des ersten Anschlusses (11) an dem Antrieb (12) und/oder die Befestigung des zweiten Anschlusses (13) an dem Abtrieb (14) spielfrei, ohne Anordnung von Loseflächen, und ohne Zwischenschaltung elastischer Elemente, erfolgt.

14. Modulbausystem für drehstarre, Radialversatz zulassende Kupplungen (10), umfassend eine erste Vorrichtung (10), nach einem der Ansprüche 1 bis 13, mit einem ersten Anschluss (11) in Form eines Ringflansches mit Abmessungen erster Art und mit einem zweiten Anschluss in Form einer ersten Nabe (13), wobei die Vorrichtung im wesentlichen drehsteif ausgebildet und wobei in dem Kraftleitungsweg zwischen den beiden Anschlüssen ein elastisches Element (25) nach Art einer Gummispur mit einer Radialerstreckung (R), die mehr als doppelt so groß, insbesondere mehr als 5 mal so groß ist wie seine Axialerstreckung (A), angeordnet ist, und weiter umfassend eine zweite Vorrichtung nach einem der Ansprüche 1 bis 13, mit einem ersten Anschluss in Form eines Ringflansches (11a) mit Abmessungen zweiter, sich von den Abmessungen erster Art unterscheidender Art, und mit einem zweiten Anschluss (13) in Form einer zweiten Nabe, die die gleichen Abmessungen besitzt, wie die erste Nabe, wobei die Vorrichtung im wesentlichen drehsteif ausgebildet und wobei in dem Kraftleitungsweg zwischen den beiden Anschlüssen ein elastisches Element (25) nach Art einer Gummispur mit einer Radialerstreckung (R), die mehr als doppelt so groß, insbesondere mehr als 5 mal so groß, ist, wie seine Axialerstreckung, angeordnet ist.

## Claims

1. Device (10) for transmitting torque from a drive (12) to an output (14), comprising a first connection (11), in particular a flange, for connection with the drive, and a second connection (13), in particular a hub, for connection with the output, whereby in the force transmission path between the two connections an elastic element (25) is disposed, which radially softly, allowing a radial offset between the first connection and the second connection, is formed, **characterised in that** at the same time the elastic element is also formed torsionally rigid, allowing only a very small twisting angle between the first connection and the second connection.

2. Device (10) for transmitting torque from a drive (12) to an output (14), in particular according to claim 1, comprising a first connection (11), in particular a flange, for connection with the drive, and a second connection (13), in particular a hub, for connection with the output, whereby the device is formed substantially torsionally rigid, **characterised in that** in the force transmission path between the two connections an elastic element (25) is disposed, which is formed in the manner of a rubber track (25), and has a radial extension (R) which is more than twice as great, in particular more than 5 times as great, as its axial extension (A).

3. Device according to one of the preceding claims, **characterised in that** the elastic element (25) consists of a rubber-elastic mass.

4. Device according to one of the preceding claims, **characterised in that** the first connection (11) is provided by a ring flange, which in particular has a plurality of fixing holes (17) distributed over the circumference.

5. Device according to claim 4, **characterised in that** the ring flange (11) consists of metal or a high-strength plastic.

6. Device according to one of the preceding claims, **characterised in that** the second connection is formed of a hub (13) which comprises a hub part (19) of high-strength plastic or metal.

7. Device according to claim 6, **characterised in that** the hub (13) has internal toothing (22), in particular for the purpose of obtaining an adjustable connection with a shaft (14) .

8. Device according to claim 6 or claim 7, **characterised in that** the hub part (19) is moulded onto this as part of the hub (13).

9. Device according to one of the preceding claims, **characterised in that** the elastic element (25) is vulcanised onto the first connection (11) and is vulcanised onto the second connection (13).

10. Device according to claim 9, **characterised in that** on the first connection (11) and on the second connection (13) vulcanisation surfaces (18, 24) are disposed, which in particular in each case are oriented substantially along a radial plane, and which in particular are oriented parallel to each other or substantially parallel to each other.

11. Device according to one of the preceding claims, **characterised in that** the elastic element (25), in consideration of a cross-section containing a rotational axis (RT) of the device, has a radial extension (R) and an axial extension (A), whereby the radial extension (R) is more than twice as great, in particular more than 5 times as great, as the axial extension (A).

12. Device according to claim 11, **characterised in that** the ratio of the radial extension (R) to the axial extension (A) behaves as a value in a range between 5:1 and 100:1, in particular as a value in a range between 5:1 and 50:1, further in particular as a value in a range between 5:1 and 10:1.

13. Device according to one of the preceding claims, **characterised in that** the fixing of the first connection (11) on the drive (12) and/or the fixing of the second connection (13) on the output (14) is made backlash-free, without the arrangement of separating surfaces and without the interposition of elastic elements.

14. Modular construction system for torsionally rigid couplings (10), allowing radial offset, comprising a first device (10), according to one of claims 1 to 13, with a first connection (11) in the form of a ring flange with dimensions of a first type and with a second connection in the form of a first hub (13), whereby the device is formed substantially torsionally rigid and whereby in the force transmission path between the two connections an elastic element (25) is disposed in the way of a rubber track with a radial extension (R) which is more than twice as great, in particular more than 5 times as great, as its axial extension (A), and further comprising a second device according to one of claims 1 to 13, with a first connection in the form of a ring flange (11a) with dimensions of a second type, different from the dimensions of a first type, and with a second connection (13) in the form of a second hub, which has the same dimensions as the first hub, whereby the device is formed substantially torsionally rigid and whereby in the force transmission path between the two connections an elastic element (25) is disposed in the way of a rubber track with a radial extension (R) which is more than twice as great, in particular more than 5 times as great, as its axial extension.

## Revendications

1. Dispositif (10) de transmission de couples d'un entraînement (12) vers une sortie (14), comprenant un premier raccordement (11), en particulier une bride, pour le raccordement avec l'entraînement, et un deuxième raccordement (13), en particulier un moyeu, pour le raccordement avec la sortie, sur le trajet de transmission des efforts, un élément élastique (25) étant disposé entre les deux raccordements, lequel est conçu avec une souplesse radiale, autorisant un décalage radial entre le premier raccordement et le deuxième raccordement, **caractérisé en ce que** l'élément élastique est conçu, en même temps aussi, rigide en torsion, autorisant seulement un très petit angle de rotation entre le premier raccordement et le deuxième raccordement.

2. Dispositif (10) de transmission de couples d'un entraînement (12) vers une sortie (14), en particulier selon la revendication 1, comprenant un premier raccordement (11), en particulier une bride, pour le raccordement avec l'entraînement, et un deuxième raccordement (13), en particulier un moyeu, pour le raccordement avec la sortie, le dispositif étant conçu essentiellement rigide en torsion, **caractérisé en ce que** sur le trajet de transmission des efforts, un élément élastique (25) est disposé entre les deux raccordements, lequel est conçu à la façon d'une trace de caoutchouc (25), et présente une extension radiale (R) qui est deux fois plus grande, en particulier 5 fois plus grande, que son extension axiale (A).

3. Dispositif selon l'une des précédentes revendications, **caractérisé en ce que** l'élément élastique (25) est composé d'une masse en caoutchouc élastique.

4. Dispositif selon l'une des précédentes revendications, **caractérisé en ce que** le premier raccordement (11) est fourni par une bride annulaire, qui comprend en particulier une pluralité d'orifices de fixation (17) répartis sur la circonférence.

5. Dispositif selon la revendication 4, **caractérisé en ce que** la bride annulaire (11) est en métal ou en une matière plastique hautement résistante.

6. Dispositif selon l'une des précédentes revendications, **caractérisé en ce que** le deuxième raccordement est formé d'un moyeu (13) qui comprend une partie de moyeu (19) en matière plastique hautement résistante ou en métal.

7. Dispositif selon la revendication 6, **caractérisé en ce que** le moyeu (13) comprend une denture interne (22), en particulier à des fins d'obtenir un raccordement, pouvant être inséré, avec un arbre (14).

8. Dispositif selon la revendication 6 ou la revendication 7, **caractérisé en ce que** la partie de moyeu (19) est injectée, en tant qu'élément constitutif du moyeu (13) au niveau de celui-ci.

9. Dispositif selon l'une des précédentes revendications, **caractérisé en ce que** l'élément élastique (25) est vulcanisé au niveau du premier raccordement (11) et est vulcanisé au niveau du deuxième raccordement (13).

10. Dispositif selon la revendication 9, **caractérisé en ce que** des faces de vulcanisation (18, 24) sont disposées au niveau du premier raccordement (11) et au niveau du deuxième raccordement (13), qui sont alignées en particulier, respectivement, essentiellement, le long d'un plan radial et qui sont disposées en particulier les unes aux autres parallèles ou essentiellement parallèlement les unes aux autres.

11. Dispositif selon l'une des précédentes revendications, **caractérisé en ce que** l'élément élastique (25), en considérant une section transversale contenant un axe de rotation (RT) du dispositif, comprend une extension radiale (R) et une extension axiale (A), l'extension radiale (R) étant deux fois plus grande, en particulier 5 fois plus grande, que l'extension axiale (A).

12. Dispositif selon la revendication 11, **caractérisé en ce que** le rapport de l'extension radiale (R) à l'extension axiale (A) se comporté comme une valeur située dans une plage entre 5:1 et 100:1, et en particulier, comme une valeur située dans une plage entre 5:1 et 50:1 et davantage notamment, comme une valeur située dans une plage entre 5:1 et 10:1

13. Dispositif selon l'une des précédentes revendications, **caractérisé en ce que** la fixation du premier raccordement (11) au niveau de l'entrainement (12) et/ou la fixation du deuxième raccordement (13) au niveau de la sortie (14) est/sont sans jeu, sans disposition de faces lâches et sans intercalation d'éléments élastiques.

14. Système modulaire de construction pour des accouplements (10) rigides en torsion, autorisant un décalage radial, comprenant un premier dispositif (10), selon l'un des revendications 1 à 13, avec un premier raccordement (11) sous la forme d'une bride annulaire, avec des dimensions de premier type et avec un deuxième raccordement sous la forme d'un premier moyeu (13), le dispositif étant conçu essentiellement rigide à la torsion et sur le trajet de transmission des efforts, un élément élastique (25) à la façon d'une trace de caoutchouc étant disposé entre les deux raccordements avec une extension radiale (R) qui est deux fois plus grande, en particulier 5 fois plus grande, que son extension axiale (A) et comprenant en plus, un deuxième dispositif selon l'une des précédentes revendications 1 à 13, avec un premier raccordement sous la forme d'une bride annulaire (11a) avec des dimensions de deuxième type divergeant des dimensions de premier type, et avec un deuxième raccordement (13) sous la forme d'un deuxième moyeu qui possède les mêmes dimensions que le premier moyeu, le dispositif étant conçu essentiellement rigide à la torsion, et sur le trajet de transmission des efforts, un élément élastique (25) à la façon d'une trace de caoutchouc étant disposé entre les deux raccordements avec une extension radiale (R) qui est deux fois plus grande, et en particulier 5 fois plus grande que son extension axiale.
